# EUROPEAN PATENT APPLICATION

(11) **EP 2 327 630 A2**
(43) Date of publication of application: **01.06.2011**
(21) Application number: 10003351.3
(22) Date of filing: 29.03.2010
(51) Int. Cl.: B64F 1/305

(54) **Boarding bridge with a minute approaching device and a shock absorbing part and operation method thereof**

(30) Priority: 25.11.2009 KR 20090114677
(71) Applicant: AB-TECH. CO., LTD, Seocho-gu Seoul, 137-862 (KR)
(72) Inventor: Park, EunWoo, Seoul 135-926 (KR)
(74) Representative: Lauer, Joachim

(57) **Abstract**

The present invention relates to a boarding bridge (100) with a minute approaching device and a shock absorbing part and an operation method thereof. The boarding bridge (100) comprises a rotunda (110); a tunnel (120) which contractably extends from the rotunda (110) and forms a passage; a cab (140) which is rotatably coupled to the tunnel (120) and connects the tunnel (120) and aircraft; a main moving device which moves the cab (140) by contraction and extension of the tunnel (120) from a standby location of the cab (140) and an adjacent location of the aircraft; and a minute approaching device which is provided in an end part of the cab (140) and minutely moves the end part of the cab (140) from the adjacent location to a contact location of the aircraft while the contraction and extension of the tunnel stops.

Accordingly, the boarding bridge (100) with the minute approaching device and the shock absorbing part and an operation method thereof according to the present invention enables an operator to operate the boarding bridge (100) more comfortably, prevents damage to the boarding bridge (100) or a fuselage, absorbs more shock and reduces or prevents a space between the boarding bridge (100) and the fuselage when the boarding bridge (100) moves upwards or downwards.

## Description

### CROSS-REFERENCE TO RELATED APPLICATION

This application claims priority from Korean Patent Application No. 2009-114677, filed on November 11, 2009, in the Korean Intellectual Property Office, the disclosure of which is incorporated herein by reference.

### FIELD OF THE INVENTION

Apparatuses and methods consistent with the present invention relate to a boarding bridge with a minute approaching device and a shock absorbing part and an operation method thereof, and more particularly, to a boarding bridge with a minute approaching device and a shock absorbing part and an operation method thereof which improves an aircraft contacting device or a shock-absorbing device.

### DESCRIPTION OF THE RELATED ART

Generally, a boarding bridge is installed to connect an airport building and aircraft to enable passengers to get on and off aircraft safely and conveniently without being affected by external environment such as weather conditions. Recently, airport buildings have been incorporated with modern and high technology, and aircraft have been upsized. Thus, the distance between aircraft and airport buildings becomes far from each other. The boarding bridge has a configuration that contacts, extends and moves depending on the size and location of a gate located in a fuselage.

The boarding bridge includes a tunnel which forms a passage therein for passengers to move and has a plurality of partitioned paths that slidably moves to adjust a length thereof; a rotunda which functions as a rotational shaft or a pillar to enable the tunnel to rotate according to a location of aircraft; a lift column and a wheel drive which move the tunnel upwards and downwards or extends or reduces the tunnel depending on a size of aircraft and a location of a gate; and a cab which rotates with regard to the tunnel and contacts aircraft to form a passage between the tunnel and the aircraft. A canopy seals the cab and the fuselage not to be affected by external air. A shock absorbing device directly contacts the fuselage and absorbs shock arising from the aircraft or the cab, and fills up a gap between the boarding bridge and the aircraft, thereby allowing passengers or cargo to move more safely.

To that end, it would be more preferable for the boarding bridge to approach the fuselage more softly and give less shock to such expensive aircraft. Even if small shock arises, it would be preferable to reduce the shock and absorb more shock. Further, it would be preferable to maintain a consistent space between an end of the boarding bridge and the fuselage when the boarding bridge moves upwards or downwards.

### SUMMARY OF THE INVENTION

Accordingly, it is an aspect of the present invention to provide a boarding bridge with a minute approaching device and a shock absorbing part and an operation method thereof which reduces shock arising from a contact of a fuselage by the boarding bridge and reduces or prevents a space when moving upwards or downward.

Also, it is another aspect of the present invention to provide a boarding bridge and an operation method thereof which includes a minute approaching device, a shock-absorbing part and a space prevention device to operate the boarding bridge more comfortably.

Further, it is another aspect of the present invention to provide a boarding bridge and an operation method thereof which includes a minute approaching device, a shock-absorbing part and a space prevention device to minimize damage to the boarding bridge and a fuselage.

Further, it is another aspect of the present invention to provide a boarding bridge and an operation method thereof which includes a minute approaching device, a shock absorbing part and a space prevention device to absorb more shock and efficiently absorb momentary shock.

Additional aspects and/or advantages of the present invention will be set forth in part in the description which follows and, in part, will be obvious from the description, or may be learned by practice of the present invention.

The foregoing and/or other aspects of the present invention are also achieved by providing a boarding bridge comprising a rotunda; a tunnel which contractably extends from the rotunda and forms a passage; a cab which is rotatably coupled to the tunnel and connects the tunnel and aircraft; a main moving device which moves the cab by contraction and extension of the tunnel from a standby location of the cab and an adjacent location of the aircraft; and a minute approaching device which is provided in an end part of the cab and minutely moves the end part of the cab from the adjacent location to a contact location of the aircraft while the contraction and extension of the tunnel stops.

According to an aspect of the invention, the main moving device comprises a wheel drive which is provided in a lower part of a lift column coupled to the tunnel and moving the tunnel upwards or downwards; and the minute approaching device comprises a fixed floor provided in a lower part of the cab toward the tunnel and a moving floor coupled in a direction facing the tunnel to move with regard to the fixed floor, and the minute approaching device moves the moving floor with regard to the fixed floor.

According to another aspect of the invention, the minute approaching device comprises a minute drive whose first side is fixed to the fixed floor and a second side is fixed to the moving floor to supply a force moving the moving floor; and a minute moving guide which guides the moving floor while the moving floor is moved by the minute drive.

According to another aspect of the invention, the boarding bridge further comprises a canopy clamp which is provided in a first side of the minute approaching device and coupled to a canopy that seals the cab and the fuselage to move along a movement of the minute approaching device.

According to another aspect of the invention, the minute approaching device further comprises a shock absorbing member which prevents a transmission of shock arising from one of the boarding bridge and the aircraft to the other one of the boarding bridge and the aircraft, and the shock absorbing part comprises a main shock absorbing member which contacts the aircraft and absorbs shock, and an auxiliary shock absorbing member which is provided between the main shock absorbing member and the minute approaching device and absorbs shock.

According to another aspect of the invention, the auxiliary shock absorbing member comprises an auxiliary spring which is coupled to the main shock absorbing member and absorbs shock, and a shock absorber guiding member which guides the main shock absorbing member and the auxiliary spring during a process of absorbing shock by the auxiliary spring.

The foregoing and/or other aspects of the present invention are also achieved by providing a boarding bridge comprising a rotunda; a tunnel which contractably extends from the rotunda and forms a passage; a cab which is rotatably coupled to the tunnel and connects the tunnel and a fuselage; a shock absorbing part which is provided not to transmit a shock arising from one of the cab and the fuselage to the other one of the cab and the fuselage; and the shock absorbing part comprising a main shock absorbing member contacting the fuselage and absorbing shock, and an auxiliary shock absorbing member provided between the main shock absorbing member and the cab and absorbing shock.

According to another aspect of the invention, the boarding bridge further comprises a main moving device which moves the cab by contraction and extension of the tunnel from a standby location of the cap to an adjacent location of the fuselage; and a minute approaching device which minutely moves the cab from the adjacent location to a contact location of the fuselage while the contraction and extension of the tunnel stops.

The foregoing and/or other aspects of the present invention are also achieved by providing an operation method of a boarding bridge, the method comprising moving a cab by a main moving device of the boarding bridge from a standby location of the cab to an adjacent location of a fuselage by contraction and extension of the tunnel, wherein the boarding bridge comprises a rotunda, a tunnel contractably extending from the rotunda and forming a passage and the cab rotatably coupled to the tunnel and connecting the tunnel and the fuselage; and moving the cab minutely by a minute approaching device from the adjacent location to a contact location of the fuselage while the contraction and extension of the tunnel stops.

According to another aspect of the invention, the method further comprises absorbing a shock by a main shock absorbing member which contacts the fuselage and prevents a transmission of a shock arising from one of the cab and the fuselage to the other one of the cab and the fuselage, and an auxiliary shock absorbing member which is provided between the main shock absorbing member and the minute approaching device and absorbs shock.

### BRIEF DESCRIPTION OF THE DRAWINGS

The above and/or other aspects of the present invention will become apparent and more readily appreciated from the following description of the embodiments, taken in conjunction with the accompanying drawings of which:
- FIG. 1: is a lateral view of a boarding bridge according to an exemplary embodiment of the present invention;
- FIG. 2: is an extended lateral view of a cab in FIG. 1;
- FIG. 3: is a plan view of a floor of the cab;
- FIG. 4: is a lateral sectional view of the floor taken along line A-A' in FIG. 3;
- FIG. 5: is a plan view of a minute approaching device;
- FIG. 6: is a lateral sectional view of a shock absorbing part;
- FIGS. 7 and 8: are lateral views which illustrate an operation process of the boarding bridge according to the present invention; and
- FIG. 9: is a block diagram of the boarding bridge.

### DETAILED DESCRIPTION OF EXEMPLARY EMBODIMENT

Hereinafter, exemplary embodiments of the present invention will be described with reference to accompanying drawings, wherein like numerals refer to like elements and repetitive descriptions will be avoided as necessary.

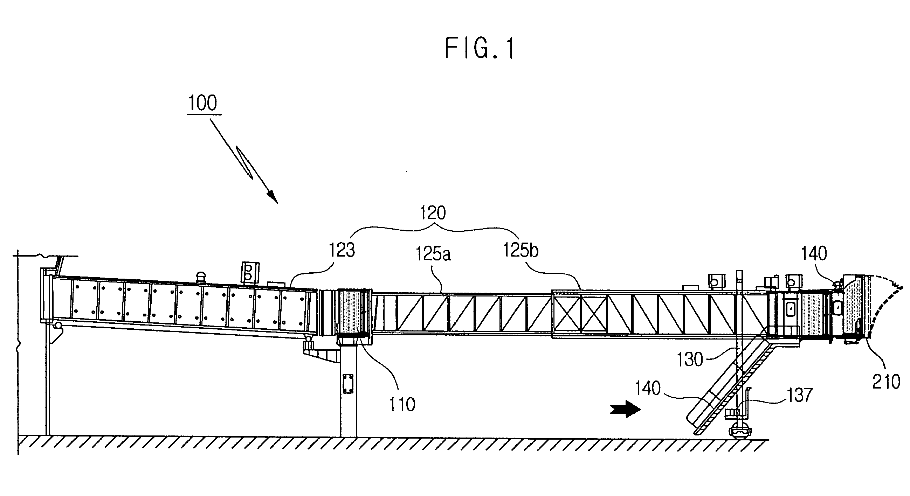

Hereinafter, a boarding bridge and an operation method thereof which includes a minute approaching device and a shock absorbing part according to the present invention will be described with reference to FIGS. 1 to 9.

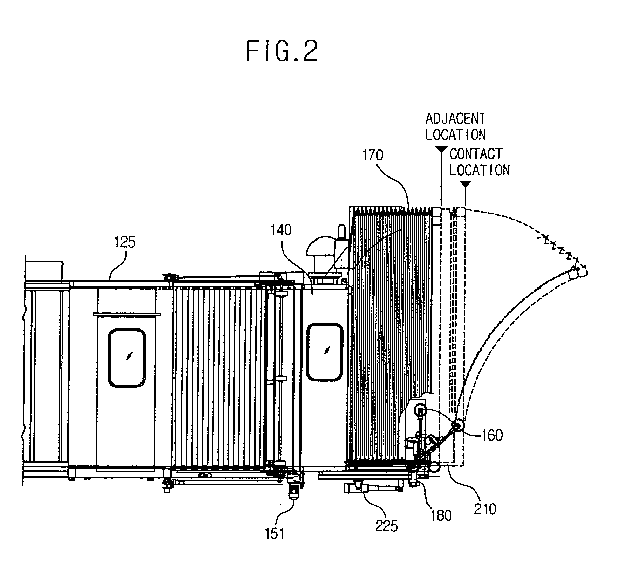

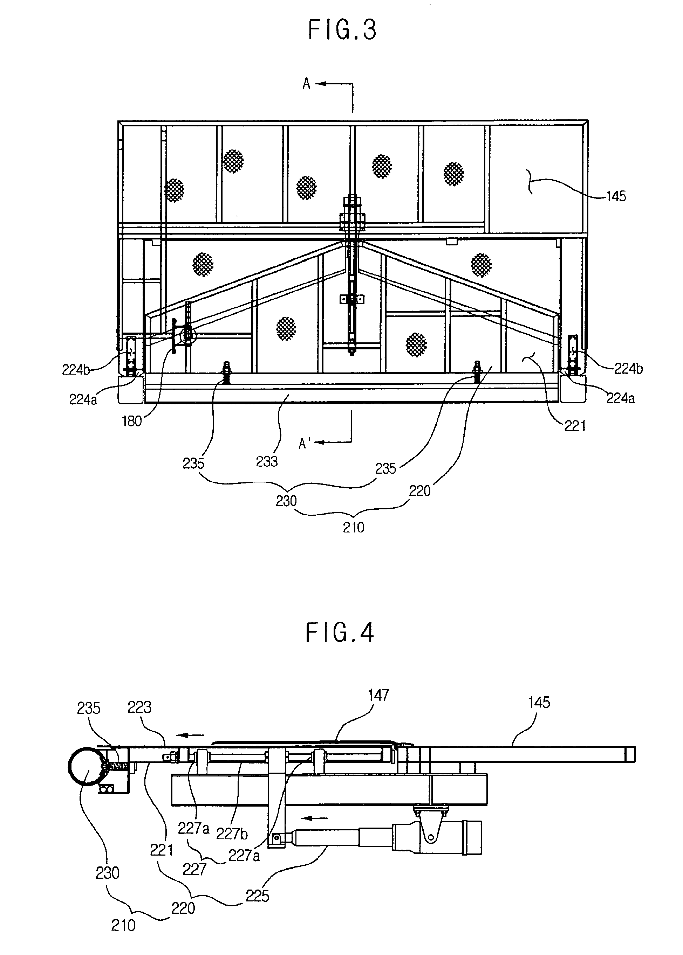

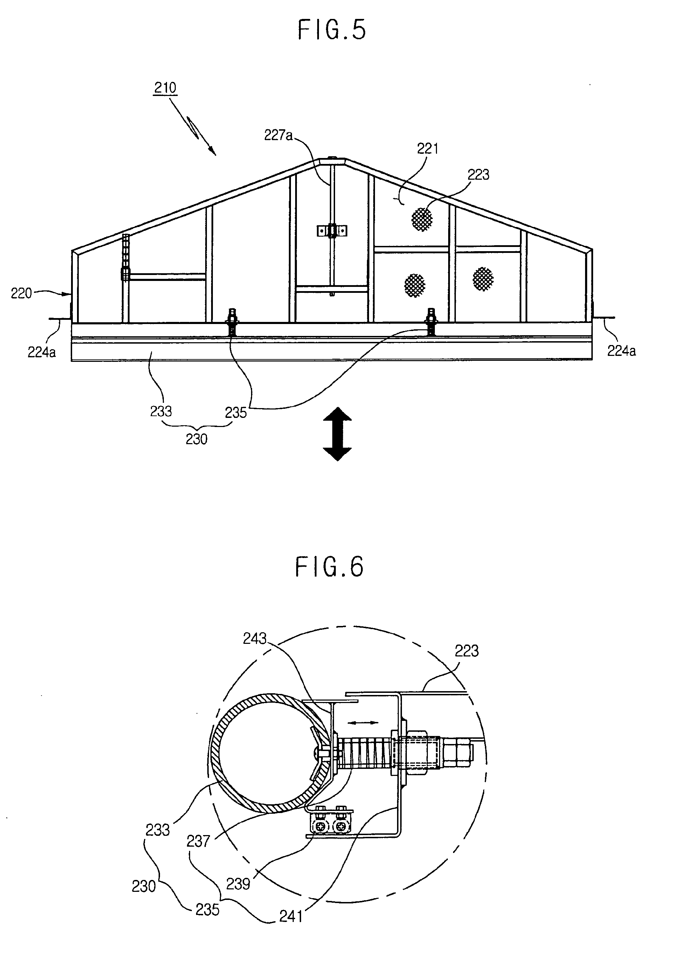

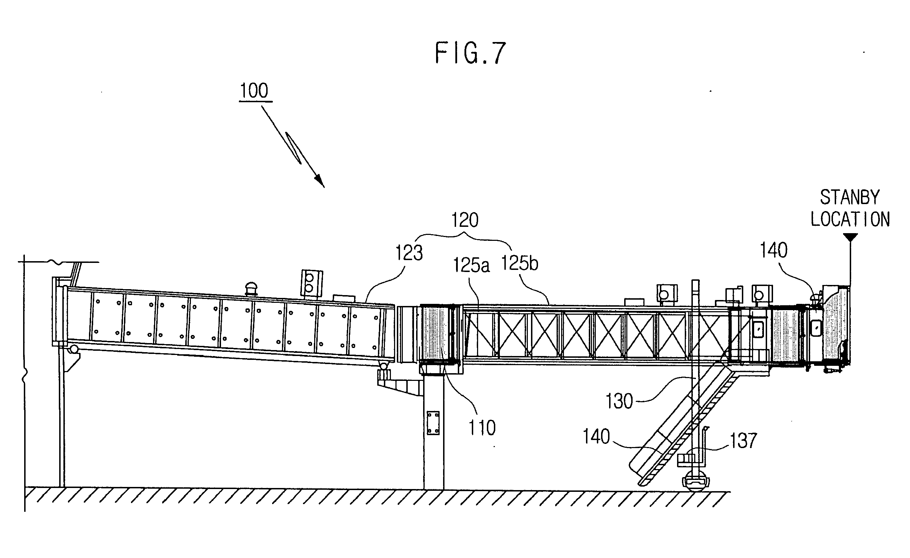

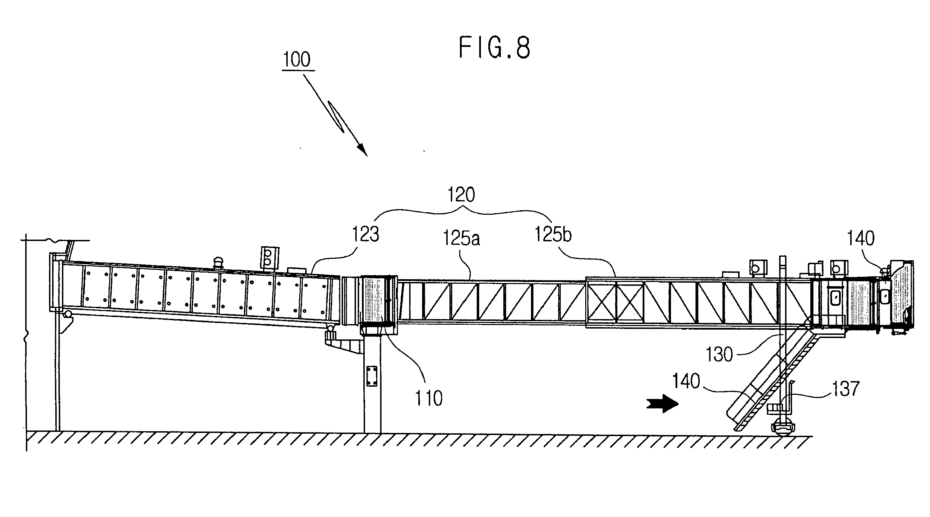

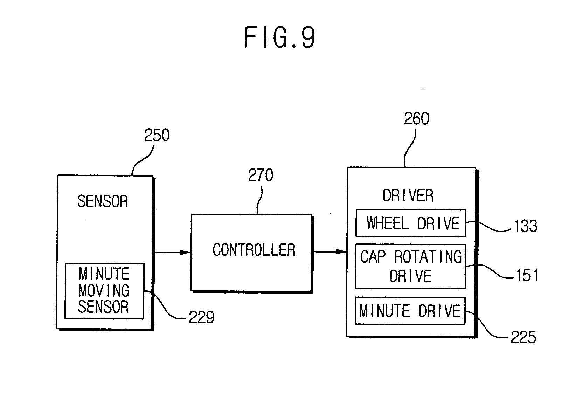

FIG. 1 is a lateral view of a boarding bridge according to an exemplary embodiment of the present invention. FIG. 2 is an extended lateral view of a cab in FIG. 1. FIG. 3 is a plan view of a floor of the cab. FIG. 4 is a lateral sectional view of the floor taken along line A-A' in FIG. 3. FIG. 5 is a plan view of a minute approaching device. FIG. 6 is a lateral sectional view of a shock absorbing part. FIGS. 7 and 8 are lateral views which illustrate an operation process of the boarding bridge according to the present invention. FIG. 9 is a block diagram of the boarding bridge.

A boarding bridge 100 according to the present invention includes a rotunda 110, a tunnel 120, a cab 140 and a minute approaching device 210 to form a passage between an airport building and aircraft to thereby enable passengers to get on the aircraft or a cargo to be loaded thereinto regardless of external weather conditions. The boarding bridge 100 further includes a shock absorbing part 230.

As shown in FIGS. 1, 7 and 8, the rotunda 110 supports the tunnel 120, and acts as a rotational shaft when the tunnel 120 rotates and acts as a supporting pillar when the tunnel 120 contracts and extends. The rotunda 110 may be extended and installed at an airport building or installed in an end part of a fixed tunnel 123 connected to the airport building as in FIG. 1.

The tunnel 120 forms a passage through which passengers move. The tunnel 120 includes the fixed tunnel 123 and contracting and extending tunnels 125a and 125b. Hereinafter, the tunnel has a reference numeral 120 without being classified particularly. The contracting and extending tunnel 120 may change its length, direction and height. The tunnel 120 may include therein various equipment such as an air-conditioning and heating equipment for passengers' convenience. The tunnel 120 may move until an adjacent location as shown in FIG. 2.

A lift column 130 is coupled to the tunnel 120 and moves the tunnel 120 upwards and downwards to adjust a height of the tunnel 120. That is, the lift column 130 adjusts the height of the tunnel 120 so that a bottom of the cab 140 corresponds to a height of a gate provided in a body the aircraft in various sizes and heights.

A wheel drive 133 which is attached to a lower part of the lift column 130 supplies a driving force to the tunnel 120 if a direction or a length of the tunnel 120 is changed. The length of the tunnel 120 may be changed by wire, chair or other various means as necessary. The reference numeral 137 refers to a service land and a stair which act as a passage to move from the outside of the tunnel 120 to the inside thereof. According to the present exemplary embodiment, a major moving device which moves the boarding bridge 100 to a standby location and the adjacent location includes the wheel drive 133.

A leveler 160 detects a height of aircraft and adjusts the height of the cab 140. If the height of the aircraft rises when the cab 140 contacts the aircraft for passengers to get off the aircraft, the leveler 160 detects the raised height of the aircraft and transmits the detection result to the controller 270. Then, the controller 270 controls the lift column 130 to raise the height of the tunnel 120. Then, the bottom of the cab 140 rises and its height becomes equal to the height of the gate of the aircraft in height. Thus, passengers may safely move between the aircraft and the boarding bridge 100.

The canopy 170 seals the cab 140 and the aircraft so that the passage is not affected by external air. The canopy 170 is shaped like a bellows. Since the canopy 170 is shaped like a bellows, it may absorb shock on its own. A contact part of the boarding bridge 100 and the aircraft is left and right sides and an end of an upper side of the canopy 170. In the minute approaching device 210, the contact part of the boarding bridge 100 and the aircraft is the shock absorbing part 230 of the end part.

A level maintaining device 180 is coupled to a lower part of the minute approaching device 210 and is supported by the fixed floor 145 to maintain a level of a moving floor 221. The level maintaining device 180 may include a mechanical lifting device unlike a pneumatic or hydraulic cylinder according to the exemplary embodiment.

The cab 140 is coupled to an end part of the tunnel 120 and forms a passage between the tunnel 120 and the aircraft. The cab 140 includes the fixed floor 145 and the moving floor 221. The cab 140 further includes a cab rotating drive 151 which supplies a rotational force to the cab 140 rotating with regard to the tunnel 120. The cab 140 is provided in an end part of the boarding bridge 100 and secures a field of vision, and includes an operation room (not shown) to operate the boarding bridge 100.

As shown in FIGS. 3 and 4, the fixed floor 145 includes a fixture which has a sufficient strength and forms a bottom of the passage in a lower part of the cab 140, and includes a moving floor panel 223 acting as a footing for passengers in an upper part thereof. A support 149 is provided in a lower part of the fixed floor 145 to support the minute approaching device 210.

As shown in FIGS. 1 to 6, the minute approaching device 210 includes a minute moving part 220 and the shock absorbing part 230. As shown in FIG. 2, the minute approaching device 210 is provided in an end part of the cab 140, and moves the cab 140 from the adjacent location to a contact location of the aircraft after the cab 140 completes moving from the standby location to the adjacent location by the movement of the tunnel 120.

The minute moving part 220 is provided in a lower end part of the cab 140, and is supported by the fixed floor 145. The minute moving part 220 includes the moving floor 221 which has a sufficient strength for passengers to move, the minute drive 225 and a minute moving guide 227.

The moving floor panel 223 is formed in an upper part of the moving floor 221 to act as a footing. As shown in FIG. 4, the moving floor panel 223 partly overlaps the fixed floor panel 147. Even if the minute approaching device 210 moves and the moving floor panel 223 moves a little, the fixed floor panel 147 overlaps the moving floor panel 223 and forms a bottom.

The minute approaching device 210 is moved by the minute drive 225 and the minute moving guide 227. A first side of the minute drive 225 is supported by the fixed floor 145 and a second side thereof is coupled with the moving floor 221 and supplies a driving force to move the moving floor 221. The minute drive 225 according to the present exemplary embodiment includes a power cylinder, but not limited thereto. Alternatively, the minute drive 225 may include a pneumatic or hydraulic cylinder, or other mechanism such as a rack and pinion having a motor. The minute moving guide 227 guides a movement of the minute approaching device 210. The minute moving guide 227 according to the present exemplary embodiment includes a bush 227a which is coupled to the fixed floor 145, and a guiding shaft 227a which is coupled to the inside of opposite bushes 227a and coupled to the moving floor 221 to slidably move. If the minute drive 225 applies a force to the moving floor 221, the guiding shaft 227a which is coupled to the moving floor 221 is guided by two bushes 227a of the fixed floor 145, and the moving floor 221 may move toward the body of the aircraft distant from the tunnel 120. The minute moving guide 227 may include a general bush, an LM guide and a rack and a pinion other than the guiding shaft 227a and the ball bush 227a.

The minute approaching device 210 further includes a canopy clamp 224a which is provided in a lateral side thereof and is coupled to the canopy 170 moving along a canopy rail 224a of the fixed floor 145. The canopy 170 may move along with the movement of the minute approaching device 210.

The shock absorbing part 230 is coupled to an end part of the minute approaching device 210 to absorb shock arising from the boarding bridge 100 or the aircraft and prevents transmission of the shock to the boarding bridge 100 or the aircraft. The shock absorbing part 230 contacts the aircraft and thus includes a material such as rubber not to damage the fuselage. The shock absorbing part 230 includes a main shock absorbing member 233 which is provided in the end part of the minute approaching device 210, and an auxiliary shock absorbing member 235 which is coupled to the minute moving part 220 and moves the main shock absorbing member 233. The main shock absorbing member 233 is shaped like a cylinder which is hollow inside. A section of the cylinder is deformed by a pressure of the minute drive 225 when contacting the fuselage. If the main shock absorbing member 233 is deformed too severely, a minute moving sensor 229 which is provided in the cylinder detects the deformation. Then, the controller 270 controls the minute drive 225 not to press the minute moving part 220. As shown in FIG. 6, a first side of the auxiliary shock absorbing member 235 is coupled to the fixed floor 145 and a second side thereof is coupled to the main shock absorbing member 233 to absorb a shock of the main shock absorbing member 233. The auxiliary shock absorbing member 235 includes an auxiliary spring 237 which absorbs shock, and a shock absorber guiding member 239 which guides a movement of the main shock absorbing member 233 according to contraction and extension of the auxiliary spring 237. The auxiliary spring 237 is coupled to a shock absorbing supporting member 241 which is shaped like an alphabet L and is supported by the fixed floor 145. The shock absorber guiding member 239 is shaped like a roller which is coupled to a shock absorbing member fixing member 243 provided between the auxiliary spring 237 and the main shock absorbing member 233 and moves along the shock absorbing supporting member 241.

In the conventional art, if the tunnel 120 moves, the lift column 130, the wheel drive 133 and the cab 140 move all and the end part of the cab 140 contacts the aircraft. That is, a weight of elements which are moved by the contact of the boarding bridge 100 and the aircraft is heavy. According to the present invention, however, a weight of elements which are moved by a contact of the aircraft is significantly lighter than that in the conventional art since only the minute approaching device 210 and the canopy 170 move. Thus, the shock which arises from the contact of the aircraft and the boarding bridge 100 is reduced in proportion to moved elements. Thus, the shock which arises from the contact of the aircraft and the boarding bridge 100 may sharply be reduced.

The shock may also arise when passengers pass the tunnel 120 and the cab 140 or move inside the aircraft not only when the boarding bridge 100 contacts the aircraft. According to the present invention, the shock absorbing part 230 includes a plurality of shock absorber members 233 and 235 and significantly reduces the shock arising from the movement of passengers. That is, the shock-absorbing part 230 may absorb shock arising from the main shock absorbing member 233 and the auxiliary shock absorbing member 235 to thereby increase the shock absorbing volume. Particularly, the shock absorbing part 230 has a configuration which efficiently responds to a heavy shock which arises momentarily from a long distance.

Thus, damage to the boarding bridge 100 or to the aircraft during the contact thereof may be prevented and an operator may operate the boarding bridge 100 more comfortably. Also, a safety accident may be prevented by a more comfortable and safe operation. Since the damage is prevented, the lifespan of the boarding bridge 100 may be extended. Passengers may move comfortably and stably. As the shock absorbing part 230 has a double shock absorbing configuration, a space which is caused by a round body of the aircraft when the aircraft moves upwards or downwards may be prevented or reduced. Since the boarding bridge 100 is closely adhered to the aircraft, passengers may feel secure. That is, in the conventional art, when the aircraft moves upwards or downwards while the boarding bridge 100 contacts the aircraft, a space between the boarding bridge 100 and the aircraft becomes larger due to a round body of the aircraft, and passengers may miss their step due to the space. According to the present invention, however, such concern may be prevented.

With the foregoing configuration, an operation process of the boarding bridge 100 according to the present invention will be described with reference to FIGS. 2, 7, 8 and 9.

The boarding bridge 100 is moved from the standby location as shown in FIG. 7 to the adjacent location as shown in FIG. 8. That is, an operator of the boarding bridge 100 or the controller 270 operates or controls the wheel drive 133 to move the cab 140 from the standby location to the adjacent location which is a location adjacent to the aircraft (e.g., approximately 200mm distant from the aircraft). During the process, the controller 270 may control the wheel drive 133 or the lift column 130, which drives a length, a direction and a height of the tunnel 120, based on information transmitted from a sensor detecting the length of the tunnel 20, a sensor detecting the direction of the tunnel 120, a sensor detecting the height of the tunnel 120 and a sensor detecting a rotation angle of the cab 140.

As shown in FIGS. 2, 8 and 9, an operator of the boarding bridge 100 or the controller 270 controls the minute approaching device 210 to move a part of the cab 140 from the adjacent location to the contact location. During this process, the fixed floor 145 of the cab 140 does not move, and only the moving floor 221 moves. That is, a pressure is applied by the minute drive 225, the moving floor 221 is guided by the minute moving guide 227 and becomes distant from the tunnel 120. Then, the moving floor 221 which is provided in the lower part of the fixed floor panel 147 moves, and the main shock absorbing member 233 contacts the fuselage and is pressed by the minute drive 225. Then, the main shock absorbing member 233 which is shaped like a hollow cylinder is deformed. If the minute moving sensor 229 detects a predetermined pressure on the main shock absorbing member 233 and transmits the detection result to the controller 270, the controller 270 controls the minute drive 225 not to press the main shock absorbing member 233. If the minute moving part 220 moves, the canopy clamp 224a attached to the minute moving part 220 also moves. The canopy 170 then moves along the canopy rail 224a of the fixed floor 145. If the minute moving part 220 contacts the aircraft, the bellows of the canopy 170 unfolds and seals the cab 140 and the aircraft. If the leveler 160 detects rise or fall of the height of the gate in the aircraft, the controller 270 controls the lift column 130 to adjust the height of the tunnel 120 based on the detection signal. The level of the minute moving part 220 is controlled by the level maintaining device 180. The reference numeral 250 refers to a sensor and the reference numeral 260 refers to a driver.

According to the present invention, a minute approaching device, instead of a tunnel, moves when the boarding bridge contacts the fuselage to thereby sharply reduce the weight of moved elements and reduce shock.

Also, the boarding bridge may be operated more comfortably since the weight of moved elements is lighter when the boarding bridge contacts the aircraft.

Further, as the weight of moved elements is lighter at the time of contact of the boarding bridge, damage to the boarding bridge or the fuselage which may arise during the contact process may be minimized.

Further, as the weight of moved elements is lighter at the time of contact of the boarding bridge, safety accident may be prevented.

Further, a plurality of shock absorbing parts may absorb more shock and efficiently absorb momentary shock.

Further, the shock absorbing part may prevent or reduce a space between the aircraft and the boarding bridge even if the aircraft in round shape moves upwards or downwards. Thus, passengers may feel comfortable when boarding the aircraft. Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A boarding bridge, comprising:
a rotunda;
a tunnel which contractably extends from the rotunda and forms a passage;
a cab which is rotatably coupled to the tunnel and connects the tunnel and aircraft;
a main moving device which moves the cab by contraction and extension of the tunnel from a standby location which the cab stands by to an adjacent location which the cap is adjacent of the aircraft; and
a minute approaching device which is provided in an end part of the cab and minutely moves the end part of the cab from the adjacent location to a contact location of the aircraft while the contraction and extension of the tunnel stops.

2. The boarding bridge according to claim 1, wherein the main moving device comprises a wheel drive which is provided in a lower part of a lift column coupled to the tunnel and moving the tunnel upwards or downwards; and
the minute approaching device comprises a fixed floor provided in a lower part of the cab toward the tunnel and a moving floor coupled in a direction facing the tunnel to move with regard to the fixed floor, and
the minute approaching device moves the moving floor with regard to the fixed floor.

3. The boarding bridge according to claim 2, wherein the minute approaching device comprises a minute drive whose first side is fixed to the fixed floor and a second side is fixed to the moving floor to supply a force moving the moving floor; and
a minute moving guide which guides the moving floor while the moving floor is moved by the minute drive.

4. The boarding bridge according to claim 1, further comprising a canopy clamp which is provided in a first side of the minute approaching device and coupled to a canopy that seals between the cab and a fuselage to move along a movement of the minute approaching device.

5. The boarding bridge according to one of claims 1 , wherein the minute approaching device further comprises a shock absorbing member which prevents a transmission of shock arising from one of the boarding bridge and the aircraft to the other one of the boarding bridge and the aircraft, and
the shock absorbing part comprises a main shock absorbing member which contacts the aircraft and absorbs shock, and an auxiliary shock absorbing member which is provided between the main shock absorbing member and the minute approaching device and absorbs shock.

6. The boarding bridge according to claim 5, wherein the auxiliary shock absorbing member comprises an auxiliary spring which is coupled to the main shock absorbing member and absorbs shock, and a shock absorber guiding member which guides the main shock absorbing member and the auxiliary spring during a process of absorbing shock by the auxiliary spring.

7. The boarding bridge according to one of claims 2 , wherein the minute approaching device further comprises a shock absorbing member which prevents a transmission of shock arising from one of the boarding bridge and the aircraft to the other one of the boarding bridge and the aircraft, and
the shock absorbing part comprises a main shock absorbing member which contacts the aircraft and absorbs shock, and an auxiliary shock absorbing member which is provided between the main shock absorbing member and the minute approaching device and absorbs shock.

8. A boarding bridge, comprising:
a rotunda;
a tunnel which contractably extends from the rotunda and forms a passage;
a cab which is rotatably coupled to the tunnel and connects the tunnel and a fuselage;
a shock absorbing part which is provided not to transmit a shock arising from one of the cab and the fuselage to the other one of the cab and the fuselage; and
the shock absorbing part comprising a main shock absorbing member contacting the fuselage and absorbing shock, and an auxiliary shock absorbing member provided between the main shock absorbing member and the cab and absorbing shock.

9. The boarding bridge according to claim 8, further comprising a main moving device which moves the cab by contraction and extension of the tunnel from a standby location which the cap stands by to an adjacent location which the cap is adjacent of the fuselage; and a minute approaching device which minutely moves the cab from the adjacent location to a contact location of the fuselage while the contraction and extension of the tunnel is stops.

10. An operation method of a boarding bridge, the method comprising:
moving a cab by a main moving device of the boarding bridge from a standby location of the cab to an adjacent location of a fuselage by contraction and extension of the tunnel, wherein the boarding bridge comprises a rotunda, a tunnel contractably extending from the rotunda and forming a passage and the cab rotatably coupled to the tunnel and connecting the tunnel and the fuselage; and
moving the cab minutely by a minute approaching device from the adjacent location to a contact location of the fuselage while the contraction and extension of the tunnel stops.

11. The method according to claim 10, further comprising absorbing a shock by a main shock absorbing member which contacts the fuselage and prevents a transmission of a shock arising from one of the cab and the fuselage to the other one of the cab and the fuselage, and an auxiliary shock absorbing member which is provided between the main shock absorbing member and the minute approaching device and absorbs shock.
